# EUROPÄISCHE PATENTSCHRIFT

(11) **EP 3 666 558 B1**
(45) Veröffentlichungstag und Bekanntmachung des Hinweises auf die Patenterteilung: **24.11.2021**
(21) Anmeldenummer: 19204788.4
(22) Anmeldetag: 23.10.2019
(51) Int. Cl.: B60D 1/06, B60D 1/58, B60D 1/28

(54) **ANHÄNGERKUPPLUNG**
TRAILER COUPLING
ATTELAGE DE REMORQUE

(30) Priorität: 13.12.2018 DE 102018132070
(43) Veröffentlichungstag der Anmeldung: 17.06.2020
(73) Patentinhaber: Pfanzelt Maschinenbau GmbH, 87675 Rettenbach a. A. (DE)
(72) Erfinder: PFANZELT, Paul, 87675 Rettenbach a. A. (DE)
(74) Vertreter: Tetzner, Michael

(56) Entgegenhaltungen:
- EP-A1- 1 564 033
- DE-U1- 20 318 531
- DE-U1-202005 017 374
- DE-U1-202013 008 659
- US-A1- 2006 055 151

## Beschreibung

Die Erfindung betrifft eine Anhängerkupplung für ein Zugfahrzeug mit einem Halterungsteil zur Befestigung der Anhängerkupplung an dem Zugfahrzeug, einem Kugelkopf und einem Niederhalter.

Der mit der Anhängerkupplung zu koppelnde Anhänger weist eine mit dem Kugelkopf korrespondierende Kupplungspfanne auf, die mittels des Niederhalters gegenüber dem Kugelkopf verriegelt wird. Bei den bekannten PKW-Anhängerkupplungen ist die anhängerseitige Kupplungspfanne selbst mit einem Verriegelungsmechanismus ausgestattet, der eine vertikale Bewegung der auf dem Kugelkopf des PKWs eingehängten Kugelpfanne verhindert. Derartige Anhängerkupplungen sind üblicherweise für Stützlasten von bis zu 100 kg ausgelegt.

Aus der EP 1 564 033 A1 ist eine Anhängerkupplung mit einem Halterungsteil zur Befestigung der Anhängerkupplung an einem Zugfahrzeug bekannt, wobei ein Tragelement, das eine Kupplungskugel und einen Niederhalter umfasst, schwenkbar in einer Führung gelagert ist und in einer Mehrzahl an Stellungen mit einem zur Lotrechten unterschiedlichen Winkel α fixierbar ist.

Die US 2006/0055151 A1 offenbart eine sogenannte Ackerschiene, die üblicherweise in die Unterlenker eines Traktors eingehängt werden. Der Drehpunkt der Aufnahmebolzen ist dabei so ausgerichtet, dass er durch den Mittelpunkt des Kugelkopfes verläuft.

Die DE 203 18 531 U1 offenbart eine Anhängerkupplung mit einem Halterungsteil zur Befestigung der Anhängerkupplung an einem Zugfahrzeug, einer Kupplungskugel für eine an einen Anhänger anschließbare Kugelkalotte und einem Niederhalter, wobei die Kupplungskugel und der Niederhalter eine Einheit bilden, die um eine in Zugrichtung verlaufende Drehachse schwenkbar mit dem Halterungsteil gekoppelt ist. Die Drehachse ist dabei so ausgerichtet, dass sie durch den Kugelmittelpunkt der Kupplungskugel verläuft, sodass der Zugangriffspunkt für die Kugelkalotte des Anhängers auch beim Verdrehen der ziehenden bzw. gezogenen Kugelkalotte unter jedem beliebigen Schwenkwinkel erhalten bleibt.

Bei Anhängerkupplungen für deutlich größere Stützlasten von wenigstens 100kg, vorzugsweise wenigstens 1.000kg, kommen sogenannte Niederhalter zur Anwendung, welche an der Anhängerkupplung des Zugfahrzeuges vorgesehen sind und die vertikale Bewegung der Kupplungspfanne relativ zum Kugelkopf auf ein einstellbares Maß im Bereich von 1 mm begrenzen soll. Der Niederhalter weist hierzu beispielsweise eine Einstellschraube auf, mit der sich der Abstand zur auf den Kugelkopf aufgesetzten Kupplungspfanne einstellen lässt. Um das Aufsetzen der Kupplungspfanne des Anhängers auf den Kugelkopf zu ermöglichen, ist der Niederhalter insbesondere wegschwenkbar oder absteckbar ausgebildet.

Im üblichen Fahrbetrieb kommt der Niederhalter nicht mit der anhängerseitigen Kupplung in Kontakt, da die anhängerseitige Kupplung aufgrund der hohen Stützlast sicher auf dem Kugelkopf ruht. Während im normalen Straßengelände keine Probleme auftauchen, kommt es aber bei steilen Überfahrten, wie beispielsweise bei einem Fahrsilo oder beim Durchfahren von steilen Mulden immer wieder mal zu einem unerwünschten Kontakt zwischen der anhängerseitigen Kupplung und dem Niederhalter, was ein Beschädigen des Niederhalters zu Folge hat. Derartige Fahrsituationen treten insbesondere im landwirtschaftlichen oder forstwirtschaftlichen Bereich häufiger auf, weil dort oft größere Neigungswinkel gefordert sind.

Der Erfindung liegt daher die Aufgabe zugrunde, die Anhängerkupplung dahingehend zu verbessern, dass ein Verbiegen oder Zerstören des Niederhalters durch die anhängerseitige Kupplung ausgeschlossen wird und dennoch die Verkehrstauglichkeit erhalten bleibt.

Erfindungsgemäß wird diese Aufgabe durch die Merkmale des Anspruches 1 gelöst.

Die erfindungsgemäße Anhängerkupplung weist einen Halterungsteil zur Befestigung der Anhängerkupplung an einem Zugfahrzeug, einen Kugelkopf und einen Niederhalter auf. Der Kugelkopf und der Niederhalter bilden dabei eine Einheit, die um eine Schwenkachse schwenkbar mit dem Halterungsteil gekoppelt ist, wobei die Schwenkachse so ausgerichtet ist, dass sie den Kugelkopf schneidet. Erfindungsgemäß ist die Schwenkachse in einem am Zugfahrzeug befestigten Zustand der Anhängerkupplung parallel zu einer Hinterachse des Zugfahrzeuges ausgerichtet. Mit anderen Worten verläuft die Schwenkachse quer zur Hauptzugrichtung der Anhängerkupplung bzw. quer zur Längsrichtung des Zugfahrzeuges.

Bei Überfahrten und beim Durchfahren von Mulden kann somit die aus Kugelkopf und Niederhalter bestehende Einheit mitschwenken, sodass die Relativbewegung zwischen dem Niederhalter und der anhängerseitigen Kupplung minimiert wird. In jedem Fall kann ein Kontakt des Niederhalters mit der anhängerseitigen Kupplung auch im extremen Gelände, wie beispielsweise beim Durchfahren von Gräben oder Kuppen, wie z. B beim landwirtschaftlichen Fahrsilo oder auch im Forstbetreib, zuverlässig vermieden werden.

Weitere Ausgestaltungen der Erfindung sind Gegenstand der Unteransprüche.

Gemäß einer weiteren Ausgestaltung der Erfindung sind der Kugelkopf und der Niederhalter auf einem Schwenkelement gehaltert, dass um die Schwenkachse schwenkbar am Halterungsteil befestigt ist. Der Halterungsteil selbst wird über geeignete Kopplungsmittel, beispielsweise Schrauben, drehfest am Zugfahrzeug befestigt. Für die Befestigung von Anhängerkupplungen an Zugfahrzeugen, insbesondere Traktoren und dergleichen, gibt es aus der Praxis vielfältige Möglichkeiten. So kann beispielsweise die Anhängerkupplung auch an einem Anhängebock des Zugfahrzeuges befestigt werden, der eine Anbringung in unterschiedlichen Höhen ermöglicht.

Idealerweise verläuft die Schwenkachse möglichst genau durch den Kugelmittelpunkt des Kugelkopfes, um zu verhindern, dass der Kugelkopf bei Zugbelastung ausschwenkt. Im Rahmen der Erfindung ist aber ein Abstand der Schwenkachse von Kugelmittelpunkt im Bereich von 0 mm +/- 50%, vorzugsweise +/- 30% und höchstvorzugsweise +/- 10% des Durchmessers des Kugelkopfes noch akzeptabel.

Gemäß einer weiteren Ausgestaltung der Erfindung weist der Halterungsteil zwei beabstandete Lagerstellen zur schwenkbaren Lagerung des Schwenkelements auf, wobei der Abstand der beiden Lagerstellen im Bereich des 1,1-fachen bis 10-fachen Durchmessers des Kugelkopfes liegt. Der Kugelkopf liegt dann zwischen den beiden Lagerstellen.

Die erfindungsgemäße Anhängerkupplung ist vorzugsweise für eine Stützlast von wenigstens 1.000 bis 4.000kg und mehr ausgelegt. Die Anhängerlast beträgt vorzugsweise wenigstens 3.000kg und mehr. Der Kugelkopf kann dabei insbesondere einen Durchmesser von 50 mm bis 120 mm aufweisen. Gemäß einer Ausführungsvariante ist die Anhängerkupplung als sogenannte K80-Kupplung mit einem Kugelkopf von 80 mm ausgebildet.

Gemäß einem bevorzugten Ausführungsbeispiel der Erfindung ist der Halterungsteil U-förmig mit zwei seitlichen Schenkeln ausgebildet, wobei das Schwenkelement im Bereich der seitlichen Schenkel verschwenkbar mit dem Halterungsteil gekoppelt ist. Weiterhin kann auch das Schwenkelement U-förmig mit zwei seitlichen Schenkeln ausgebildet sein, wobei das Halterungselement und das Schwenkelement jeweils im Bereich ihrer seitlichen Schenkel miteinander gekoppelt sind.

Weitere Vorteile und Ausgestaltungen der Erfindung werden anhand der nachfolgenden Beschreibung und der Zeichnung näher erläutert.

In der Zeichnung zeigen
- Fig. 1: eine dreidimensionale Darstellung eines erfindungsgemäßen Ausführungsbeispiels der Anhängerkupplung,
- Fig. 2: eine Schnittdarstellung im Bereich der Schwenkachse,
- Fig. 3: eine dreidimensionale Darstellung der am Zugfahrzeug befestigten Anhängerkupplung beim Zusammenwirken mit einer anhängerseitigen Kupplung,
- Fig. 4: eine Seitenansicht der Darstellung gemäß Fig. 3 in einer ersten Stellung des Schwenkelements,
- Fig. 5: eine Seitenansicht der Darstellung gemäß Fig. 3 in einer zweiten Stellung des Schwenkelements,
- Fig. 6: eine Seitenansicht der Anhängerkupplung gemäß einer zweiten Ausgestaltung und
- Fig. 7: eine Seitenansicht der Anhängerkupplung gemäß einer dritten Ausgestaltung.

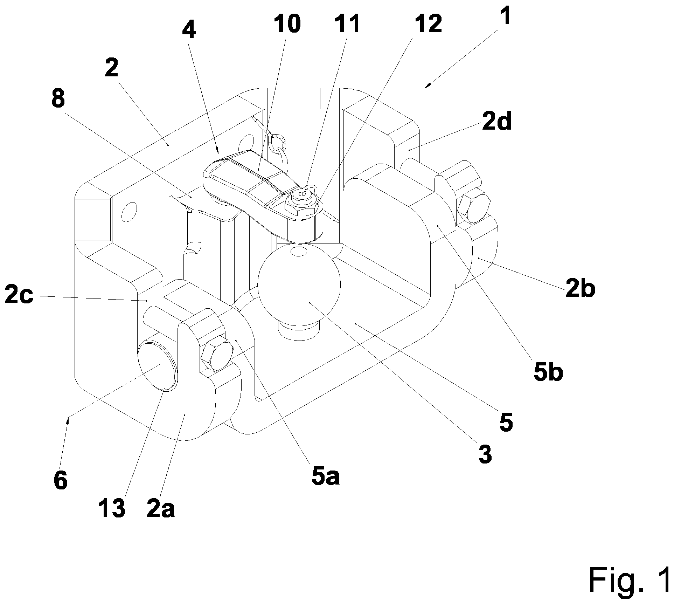

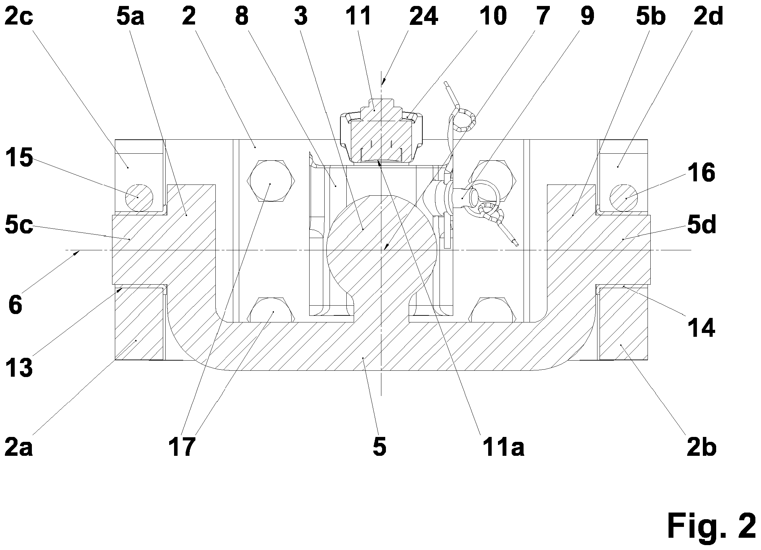

In den Figuren 1 und 2 ist eine Anhängerkupplung 1 für ein Zugfahrzeug dargestellt, die einen Halterungsteil 2 zur Befestigung der Anhängerkupplung 1 am Zugfahrzeug, einen Kugelkopf 3 und einen Niederhalter 4 umfasst. Der Kugelkopf 3 und der Niederhalter 4 sind dabei auf einem U-förmigen Schwenkelement 5 gehaltert, dass um eine Schwenkachse 6 schwenkbar am Halterungsteil 2 befestigt ist. Im dargestellten Ausführungsbeispiel verläuft die Schwenkachse 6 durch den Kugelmittelpunkt 7 des Kugelkopfes 3. Es ist aber in jedem Fall wichtig, dass die Schwenkachse so ausgerichtet ist, dass sie den Kugelkopf 3 zumindest schneidet. Vorzugsweise sollte die Schwenkachse einen Abstand von Kugelmittelpunkt im Bereich von 0 mm +/- 30% des Durchmessers des Kugelkopfes aufweisen. Um ein Ausschwenken des Kugelkopfes 3 bei einer Zugbelastung vollständig zu vermeiden, ist es jedoch zweckmäßig, wenn die Schwenkachse im Wesentlichen durch den Kugelmittelpunkt 7 verläuft, wie dies beim dargestellten Ausführungsbeispiel der Fall ist.

Zum Ankuppeln eines Anhängers ist es erforderlich, dass der Niederhalter 4 abgenommen oder weggeschwenkt wird. Bezüglich des Niederhalters kann der Fachmann auf herkömmliche Lösungen zurückgreifen. Im dargestellten Ausführungsbeispiel wird der Niederhalter 4 in einen Sockel 8 eingesteckt und über einen Bolzen 9 drehfest in der eingesteckten Stellung gesichert. Der Niederhalter 4 weist in der in den Figuren 1 und 2 gezeigten, eingesteckten Stellung einen Arm 10 auf, der bis über den Kugelkopf 3 ragt und über dem Kugelmittelpunkt 7 eine Einstellschraube 11 haltert, welche durch den Arm 10 auf die dem Kugelkopf 2 zugewandte Seite des Armes 10 hindurchragt. Die Einstellschraube weist ein dem Kugelkopf 3 zugewandtes Ende 11a auf, wobei sich der Abstand zwischen dem Ende 11a der Einstellschraube 11 und dem Kugelkopf 3 durch Drehen der Einstellschraube 11 einstellen lässt. Die Stellung des unteren Endes 11a der Einstellschraube 11 bezüglich des Kugelkopfes 3 kann zudem über eine Feststellmutter 12 fixiert werden. Der Abstand wird dabei relativ klein gewählt, sodass sich bei einer eingehängten, anhängerseitigen Kupplungspfanne ein Abstand zur Kupplungspfanne von beispielsweise 1 +/- 0,5 mm ergibt. Der Niederhalter soll dabei verhindern, dass sich die Kupplungspfanne des Anhängers in ungewollter Weise vom Kugelkopf 3 löst. Andererseits muss der Abstand ausreichend groß sein, um zu verhindern, dass der Niederhalter bzw. insbesondere das untere Ende 11a der Einstellschraube 11 bei Kurvenfahrten oder Geländeunebenheiten mit dem anhängerseitigen Kupplungsteil in Kontakt kommt und unnötig verschleißt.

Der Halterungsteil 2 ist im dargestellten Ausführungsbeispiel ebenfalls U-förmig ausgebildet und weist zwei seitliche Schenkel 2a, 2b auf, die jeweils eine Lagerstelle 13, 14 bilden. Das U-förmige Schwenkelement 5 weist ebenfalls zwei seitliche Schenkel 5a, 5b auf, die jeweils mit einem Achsstummel 5c bzw. 5d versehen sind, die in den Lagerstellen 13, 14 am Halterungsteil 2 schwenkbeweglich um die Schwenkachse 6 gehaltert sind. Das Schwenkelement 5, der Kugelkopf 3 und der Sockel 8 können dabei beispielsweise als einstückiges Metallteil gefertigt sein.

Um die Montage des Schwenkelements 5 am Halterungsteil 2 zu ermöglichen, ist im dargestellten Ausführungsbeispiel im Bereich der Lagerstellen 13, 14 eine nach oben offene Nut 2c bzw. 2d vorgesehen, über welche die Achsstummel 5c, 5d in die Lagerstellen 13 bzw. 14 eingeführt werden können. Zur Sicherung des Schwenkelements 5 am Halterungsteil 2 sind oberhalb der Achsstummel 5c, 5d verschraubbare Sicherungsbolzen 15, 16 angebracht. Im Rahmen der Erfindung sind aber auch andere Lösungen denkbar, so kann die Schwenkachse beispielsweise durch zwei kurze Steckachsen gebildet werden. Eine zweiteilige Ausbildung des Halterungsteils wäre auch denkbar.

Das oben anhand der Zeichnung beschriebene Ausführungsbeispiel ermöglicht ein Schwenken des Schwenkelements 5 um die Schwenkachse 6, wobei der fest mit dem Schwenkelement verbundene Kugelkopf 3 sowie der Niederhalter 4 als Einheit mitschwenken.

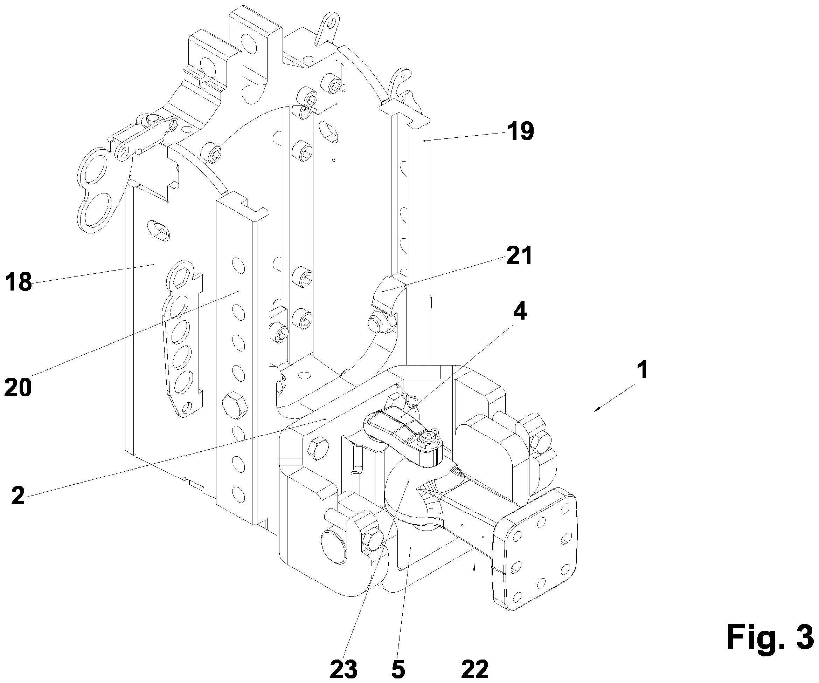

Der Halterungsteil 2 wird über geeignete Kopplungsmittel, beispielsweise Schrauben 17, drehfest am Zugfahrzeug befestigt. Hierbei kommen prinzipiell alle im Stand der Technik bekannten Befestigungsarten von Anhängerkupplungen an Zugfahrzeugen in Betracht. In der dreidimensionalen Darstellung gemäß Fig. 3 ist ein herkömmlicher Anhängebock 18 eines Zugfahrzeugs, insbesondere eines Traktors dargestellt. Dieser Anhängebock 18 weist zwei gegenüberliegende Aufnahmeschienen 19, 20 auf, in denen eine Tragplatte 21 verschoben und in einer gewünschten Höhe fixiert werden kann. Die Anhängerkupplung 1 ist dabei mit dieser Tragplatte 21 verschraubt und kann auf diese Weise in der gewünschten Höhe von Boden drehfest am Zugfahrzeug befestigt werden. In dieser Darstellung ist auch die am Kugelkopf 3 eingehängte anhängerseitige Kupplung 22 mit der Kupplungspfanne 23 dargestellt.

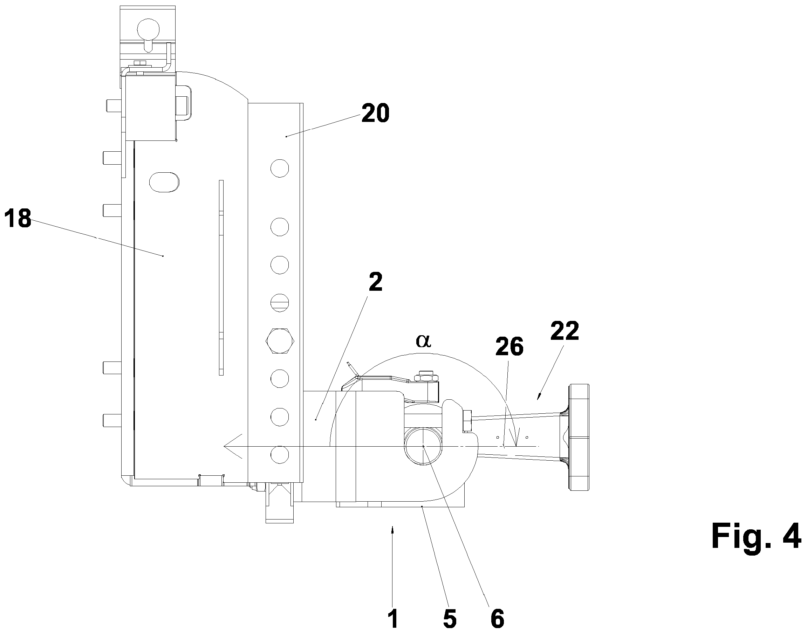

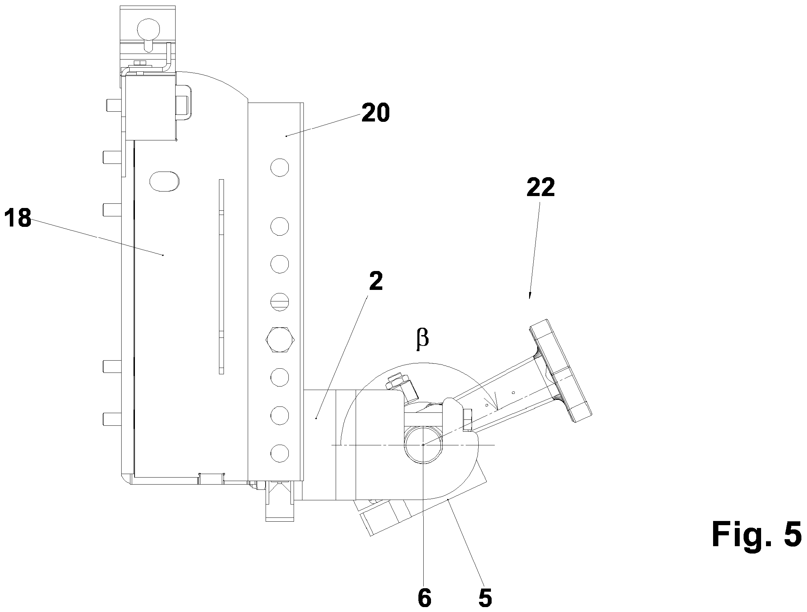

In den Figuren 4 und 5 sind zwei unterschiedliche Fahrsituationen veranschaulicht. Fig. 4 zeigt eine Situation, bei der sich das Zugfahrzeug und der Anhänger auf einer ebenen oder gleichmäßig geneigten Oberfläche befinden. Hier nimmt das Schwenkelement 5 bzw. der Kugelkopf und Niederhalter 4 eine Stellung ein, welche mit der Ausrichtung einer herkömmlichen Anhängerkupplung vergleichbar ist. In der Fahrsituation gemäß Fig. 5 durchfährt das Gespann aus Zugfahrzeug und Anhänger gerade eine Mulde, bei der das Zugfahrzeug den tiefsten Punkt schon überwunden hat, während der Anhänger noch in die Mulde hinfährt. In Fig. 4 beträgt der Winkel α zwischen der Zugrichtung 25 der zugfahrzeugseitigen Anhängerkupplung 1 und der Längsrichtung 26 der anhängerseitigen Kupplung 22 etwa 180°. Beim Durchfahren der Mulde verkleinert sich dieser Winkel um beispielsweise 20° bis 30°. Es ergibt sich dann ein Winkel β von beispielsweise 150°. Bei herkömmlichen Anhängerkupplungen besteht in dieser Fahrsituation die Gefahr, dass die anhängerseitige Kupplung 22 beim Hochschwenken mit dem Niederhalter 4 in Kontakt kommt und diesen dabei verbiegt oder gar zerstört.

Erfindungsgemäß erfolgt jedoch in dieser Fahrsituation ein Verschwenken der aus Kugelkopf 3 und Niederhalter 4 bestehenden Einheit durch Verschwenken des Schwenkelements 5 um die Schwenkachse 6, wie dies aus Fig. 5 hervorgeht. Eine Kollision der anhängerseitigen Kupplung 22 mit dem Niederhalter 4 kann auf diese Weise verhindert werden.

Die erfindungsgemäße Anhängerkupplung ist insbesondere für landwirtschaftliche oder forstwirtschaftliche Fahrzeuge, aber auch für alle anderen Fahrzeuge besonders geeignet, wo es durch die Art des Untergrundes zu extremen Stellungen zwischen der Anhängerkupplung 1 des Zugfahrzeuges und der anhängerseitigen Kupplung 22 kommen kann.

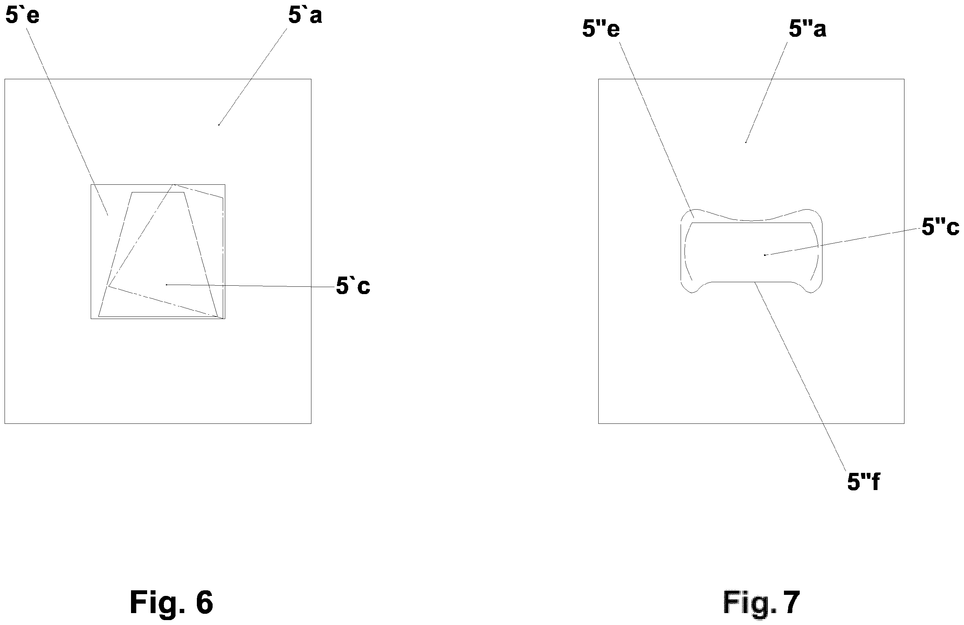

Bei dem bisher beschriebenen Ausführungsbeispiel wurde die Schwenkbeweglichkeit der aus Kugelkopf 3 und Niederhalter 4 gebildeten Einheit um die Schwenkachse 6 über zylindrische Achsstummel 5c, 5d realisiert. Im Rahmen der Erfindung ist es aber auch denkbar, dass die Achsstummel eine nicht kreisförmige Querschnittsform aufweisen. Fig. 6 zeigt eine Seitenansicht einer Anhängerkupplung gemäß einem zweiten Ausführungsbeispiel, bei dem ein Achsstummel 5'c in einer Aussparung 5' e eines Schenkels 5'a gelagert ist und der Querschnitt des Achsstummels 5'c trapezförmig ausgebildet ist. Dies hat zur Folge, dass ein Schwenken bzw. Kippen nicht sofort bei jedem von 180° abweichenden Winkel α erfolgt. Es ist vielmehr erst ein gewisses Kippmoment zu überwinden, bevor die aus Kugelkopf und Niederhalter gebildete Einheit in die eine oder andere Richtung schwenkt. Eine der beiden maximal gekippten Stellungen ist dabei gestrichelt dargestellt.

Fig. 7 zeigt eine dritte Ausgestaltung, bei welcher ein Achsstummel 5"c flach bzw. im Querschnitt rechteckförmig ausgebildet ist. Die Aussparung 5"e sieht dabei in einem Mittelbereich eine kleine Erhöhung 5"f vor, sodass der Achsstummel in begrenztem Umfang auf dieser Erhöhung 5"f schwenken kann.

Im ersten Ausführungsbeispiel weisen die Schenkel 2a, 2b des Halterungselements 2 Nuten 2c, 2d auf, um das Schwenkelement einhängen zu können. Es wäre aber auch denkbar dass die Aussparung für die Achsstummel durch eine geschlossene Kontur gebildet wird und die Montage durch eine zweiteilige Ausführung des Halterungsteils realisiert wird.

Die Ausführungen gemäß den Figuren 6 und 7 haben den Vorteil, dass das Schwenkelement auch dann stabil in der waagerechten Lage bleibt, wenn sich die Drehachse nicht genau in der Kugelmitte befindet. Selbstverständlich sind im Rahmen der Erfindung auch noch viele weitere Varianten denkbar, die man nach diesem Konstruktionsprinzip aufbauen könnte.

## Patentansprüche

1. Anhängerkupplung (1) mit einem Halterungsteil (2) zur Befestigung der Anhängerkupplung (1) an einem Zugfahrzeug, einem Kugelkopf (3) und einem Niederhalter (4),
wobei der Kugelkopf (3) und der Niederhalter (4) eine Einheit bilden, die um eine Schwenkachse (6) schwenkbar mit dem Halterungsteil (2) gekoppelt ist, wobei die Schwenkachse (6) so ausgerichtet ist, dass sie den Kugelkopf (3) schneidet,
**dadurch gekennzeichnet, dass** die Schwenkachse (6) in einem am Zugfahrzeug befestigten Zustand der Anhängerkupplung (1) parallel zu einer Hinterachse des Zugfahrzeugs ausgerichtet ist, um bei Überfahrten und beim Durchfahren von Mulden ein Mitschwenken der aus Kugelkopf und Niederhalter bestehenden Einheit zu ermöglichen.

2. Anhängerkupplung (1) nach Anspruch 1, **dadurch gekennzeichnet, dass** der Kugelkopf (3) und der Niederhalter (4) auf einem Schwenkelement (5) gehaltert sind, das um die Schwenkachse (6) schwenkbar am Halterungsteil (2) befestigt ist.

3. Anhängerkupplung (1) nach Anspruch 1, **dadurch gekennzeichnet, dass** die Schwenkachse (6) einen Abstand vom Kugelmittelpunkt (7) des Kugelkopfes (3) im Bereich von 0 mm +/- 30% des Durchmessers des Kugelkopfes (3) aufweist.

4. Anhängerkupplung (1) nach Anspruch 1, **dadurch gekennzeichnet, dass** die Schwenkachse (6) durch den Kugelmittelpunkt (7) des Kugelkopfes (3) verläuft.

5. Anhängerkupplung (1) nach Anspruch 2, **dadurch gekennzeichnet, dass** der Halterungsteil (2) zwei beabstandete Lagerstellen (13, 14) zur schwenkbaren Lagerung des Schwenkelements (5) aufweist, wobei der Abstand der beiden Lagerstellen (13, 14) im Bereich des 1,1-fachen bis 10-fachen Durchmessers des Kugelkopfes (3) liegt.

6. Anhängerkupplung (1) nach Anspruch 1, **dadurch gekennzeichnet, dass** zur drehfesten Befestigung des Halterungsteils (2) am Zugfahrzeug Kopplungsmittel (17) vorgesehen sind.

7. Anhängerkupplung (1) nach Anspruch 1, **dadurch gekennzeichnet, dass** die Anhängerkupplung (1) für eine Stützlast von wenigstens 1.000 kg ausgelegt ist.

8. Anhängerkupplung (1) nach Anspruch 1, **dadurch gekennzeichnet, dass** die Anhängerkupplung (1) für eine Anhängelast von wenigstens 3.000 kg ausgelegt ist.

9. Anhängerkupplung (1) nach Anspruch 1, **dadurch gekennzeichnet, dass** der Kugelkopf (3) einen Durchmesser von 50 mm bis 120 mm aufweist.

10. Anhängerkupplung (1) nach Anspruch 2, **dadurch gekennzeichnet, dass** der Halterungsteil (2) U-förmig mit zwei seitlichen Schenkeln (2a, 2b) ausgebildet ist und das Schwenkelement (5) im Bereich der seitlichen Schenkel (2a, 2b) verschwenkbar am Halterungsteil (2) angekoppelt ist.

11. Anhängerkupplung (1) nach Anspruch 2, **dadurch gekennzeichnet, dass** das Schwenkelement (5) U-förmig mit zwei seitlichen Schenkeln (5a, 5b) ausgebildet ist und das Schwenkelement (5) im Bereich seiner seitlichen Schenkel (5a, 5b) verschwenkbar am Halterungsteil (2) angekoppelt ist.

## Claims

1. Trailer coupling (1) comprising a mounting part (2) for fastening the trailer coupling (1) to a towing vehicle, a ball head (3) and a hold-down plate (4),
the ball head (3) and the hold-down plate (4) forming a unit which is coupled to the mounting part (2) so as to be pivotable about a pivot axis (6), the pivot axis (6) being aligned so that it intersects the ball head (3),
**characterized in that**, when the trailer coupling (1) is attached to the towing vehicle, the pivot axis (6) is aligned parallel to a rear axle of the towing vehicle in order to enable the unit consisting of the ball head and hold-down plate to pivot during transit and when driving through troughs.

2. Trailer coupling (1) according to claim 1, **characterized in that** the ball head (3) and the hold-down plate (4) are mounted on a pivot element (5) which is attached to the mounting part (2) so as to be pivotable about the pivot axis (6).

3. Trailer coupling (1) according to claim 1, **characterized in that** the pivot axis (6) is at a distance from the ball center (7) of the ball head (3) in the range of 0 mm +/- 30% of the diameter of the ball head (3).

4. Trailer coupling (1) according to claim 1, **characterized in that** the pivot axis (6) runs through the center (7) of the ball head (3).

5. Trailer coupling (1) according to claim 2, **characterized in that** the mounting part (2) has two spaced-apart bearing points (13, 14) for pivotally mounting the pivot element (5), the distance between the two bearing points (13, 14) lying in the range of 1.1 to 10 times the diameter of the ball head (3).

6. Trailer coupling (1) according to claim 1, **characterized in that** coupling means (17) are provided for the non-rotatable fastening of the mounting part (2) on the towing vehicle.

7. Trailer coupling (1) according to claim 1, **characterized in that** the trailer coupling (1) is designed for a support load of at least 1,000 kg.

8. Trailer coupling (1) according to claim 1, **characterized in that** the trailer coupling (1) is designed for a trailer load of at least 3,000 kg.

9. Trailer coupling (1) according to claim 1, **characterized in that** the ball head (3) has a diameter of 50 mm to 120 mm.

10. Trailer coupling (1) according to claim 2, **characterized in that** the mounting part (2) is U-shaped having two side legs (2a, 2b) and the pivot element (5) is pivotable on the mounting part (2) in the region of the side legs (2a, 2b).

11. Trailer coupling (1) according to claim 2, **characterized in that** the pivot element (5) is U-shaped having two side legs (5a, 5b) and the pivot element (5) is pivotable on the mounting part (2) in the region of its side legs (5a, 5b).

## Revendications

1. Attelage de remorque (1) comprenant une pièce de support (2) servant à la fixation de l'attelage de remorque (1) sur un véhicule tracteur, comprenant une tête sphérique (3) et un dispositif de maintien (4),
où la tête sphérique (3) et le dispositif de maintien (4) forment un ensemble qui est couplé à la pièce de support (2) en pouvant pivoter autour d'un axe de pivotement (6), où l'axe de pivotement (6) est orienté de manière telle, qu'il coupe la tête sphérique (3),
**caractérisé en ce que** l'axe de pivotement (6), quand l'attelage de remorque (1) est fixé sur le véhicule tracteur, est orienté parallèlement à un essieu arrière du véhicule tracteur, afin de permettre, lors de trajets et en traversant des creux, un pivotement simultané de l'ensemble se composant de la tête sphérique et du dispositif de maintien.

2. Attelage de remorque (1) selon la revendication 1, **caractérisé en ce que** la tête sphérique (3) et le dispositif de maintien (4) sont supportés sur un élément pivotant (5) qui est fixé sur la pièce de support (2) en pouvant pivoter autour de l'axe de pivotement (6).

3. Attelage de remorque (1) selon la revendication 1, **caractérisé en ce que** l'axe de pivotement (6) présente un espace par rapport au point sphérique central (7) de la tête sphérique (3), ledit espace se situant dans la plage de 0 mm ± 30 % du diamètre de la tête sphérique (3).

4. Attelage de remorque (1) selon la revendication 1, **caractérisé en ce que** l'axe de pivotement (6) s'étend en passant par le point sphérique central (7) de la tête sphérique (3).

5. Attelage de remorque (1) selon la revendication 2, **caractérisé en ce que** la pièce de support (2) présente deux points d'appui (13, 14) espacés et destinés au montage pivotant de l'élément pivotant (5), où l'espace entre les deux points d'appui (13, 14) se situe dans la plage allant de 1,1 fois à 10 fois le diamètre de la tête sphérique (3).

6. Attelage de remorque (1) selon la revendication 1, **caractérisé en ce que** des moyens de couplage (17) sont prévus pour la fixation - solidaire en rotation - de la pièce de support (2) sur le véhicule tracteur.

7. Attelage de remorque (1) selon la revendication 1, **caractérisé en ce que** l'attelage de remorque (1) est conçu pour une charge d'appui au moins de 1.000 kg.

8. Attelage de remorque (1) selon la revendication 1, **caractérisé en ce que** l'attelage de remorque (1) est conçu pour une charge tractable au moins de 3.000 kg.

9. Attelage de remorque (1) selon la revendication 1, **caractérisé en ce que** la tête sphérique (3) présente un diamètre de 50 mm à 120 mm.

10. Attelage de remorque (1) selon la revendication 2, **caractérisé en ce que** la pièce de support (2) est configurée en forme de u en ayant deux branches latérales (2a, 2b), et l'élément pivotant (5) est couplé à la pièce de support (2), en pouvant pivoter dans la zone des branches latérales (2a, 2b).

11. Attelage de remorque (1) selon la revendication 2, **caractérisé en ce que** l'élément pivotant (5) est configuré en forme de u en ayant deux branches latérales (5a, 5b), et l'élément pivotant (5) est couplé à la pièce de support (2), en pouvant pivoter dans la zone de ses branches latérales (5a, 5b).
